# EUROPÄISCHE PATENTSCHRIFT

(11) **EP 1 352 778 B1**
(45) Veröffentlichungstag und Bekanntmachung des Hinweises auf die Patenterteilung: **20.12.2006**
(21) Anmeldenummer: 03007750.7
(22) Anmeldetag: 04.04.2003
(51) Int. Cl.: B60L 13/10

(54) **Vorrichtung zum Betreiben eines Magnetfahrzeugs**
Device for operating a magnetic vehicle
Dispositif de fonctionnement d'un véhicule magnétique

(30) Priorität: 10.04.2002 DE 10216300; 19.06.2002 DE 10227253
(43) Veröffentlichungstag der Anmeldung: 15.10.2003
(73) Patentinhaber: Transrapid International GmbH & Co.KG, 10587 Berlin (DE)
(72) Erfinder: Fischperer, Rolf, Dipl.-Ing., 10623 Berlin (DE)
(74) Vertreter: Freiherr von Schorlemer, Reinfried

(56) Entgegenhaltungen:
- EP-A- 1 070 786
- DE-A- 3 909 705
- US-A- 5 361 707

## Beschreibung

Die Erfindung betrifft eine Vorrichtung der im Oberbegriff des Anspruchs 1 angegebenen Gattung.

Langstator-Linearmotoren der hier interessierenden Art (z. B. US-PS 5 053 654, DE 199 22 441 A1) enthalten als Primärteil einen längs einer gegebenen Trasse verlegten Langstator mit wenigstens einer Langstatorwicklung (z. B. US-PS 4 665 329, US-PS 4 728 382), in der ein in Bewegungsrichtung des zu betreibenden Fahrzeugs fortschreitendes, elektromagnetisches Wanderfeld erzeugt wird. Als Sekundärteil dient dagegen eine am Fahrzeug montierte, meistens über dessen ganzen Länge erstreckte Erregeranordnung (z. B. DE 34 10 119 A1), die aus gleichzeitig als Tragmagnete wirkenden Elektromagneten zusammengesetzt ist. Die Langstatorwicklung wird gewöhnlich in eine Vielzahl von Wicklungsabschnitten unterteilt, die in Fahrtrichtung unmittelbar hintereinander liegen, durch Wechselstellen elektrisch voneinander getrennt sind und mit Längen von z. B. 1000 m bis 2000 m zwar vergleichsweise kurz, aber erheblich länger als das z. B. bis 250 m lange Fahrzeug sind. Parallel zum Fahrweg ist außerdem wenigstens ein vergleichsweise langes, z. B. ca. 40 km langes Streckenkabel verlegt, das an einem oder beiden Enden an ein sogenanntes Unterwerk angeschlossen ist, in dem die zur Strom- und Spannungsversorgung der Statorwicklung erforderlichen Umrichter od. dgl. installiert sind. Zur Begrenzung des Energieverbrauchs und der wirksamen Impedanz wird dabei immer nur derjenige Wicklungsabschnitt, in dem sich das Fahrzeug gerade befindet, mit Strom versorgt, indem die einzelnen Wicklungsabschnitte mit Hilfe von Schalteinrichtungen entsprechend der Fortbewegung des Fahrzeugs einzeln und nacheinander mit dem Streckenkabel verbunden werden. Die dazu erforderlichen Umschaltungen erfolgen nach Verfahren, die unter Bezeichnungen wie z. B. Kurzschluß-, Bocksprung-, Wechselschritt-, Dreischritt-Verfahren od. dgl. bekannt geworden sind (z. B. elektrotechnische Zeitschrift etz, Bd. 108, 1987, Heft 9, Seiten 378 bis 381). Daneben ist es auch bekannt, die einzelnen Wicklungsabschnitte auf einem Teil ihrer Länge überlappt anzuordnen und die Umschaltungen von einem auf den anderen Wicklungsabschnitt immer dann vorzunehmen, wenn sich das Fahrzeug in einem überlappten Bereich befindet (US-PS 4 454 457).

Beim Betrieb eines derartigen Magnetschwebefahrzeugs müssen die Unterwerke Spannungen liefern, die im wesentlichen gleich der Summe aus der vom Fahrzeug induzierten Spannung (Polradspannung), dem Spannungsabfall am jeweiligen Wicklungsabschnitt und dem Spannungsabfall am zugehörigen Teil des Streckenkabels sind. Wird der Spannungsabfall am Streckenkabel vernachlässigt, steht für den Antrieb des Fahrzeugs derjenige Strom zur Verfügung, der sich mit dem die Polradspannung übersteigenden Teil der vom Unterwerk gelieferten Spannung erzielen läßt.

Die Polradspannung ist insbesondere bei hohen Geschwindigkeiten im wesentlichen proportional sowohl zur Geschwindigkeit des Fahrzeugs als auch zur Länge der Erregeranordnung (Fahrzeuglänge). Daher müssen die von den Unterwerken gelieferten Spannungen in denjenigen Streckenteilen, in denen hohe Geschwindigkeiten erzielt werden sollen, besonders groß sein. Das gilt umso mehr, als die Unterwerke dieser Streckenteile an ihren Ausgängen mit hoch übersetzten Transformatoren versehen sind und daher zwar hohe Spannungen liefern, aber nur kleine Ströme und damit kleine Schubkräfte bzw. Leistungen ermöglichen.

Dem Vorteil eines vergleichsweise geringen konstruktiven Aufwandes längs der Trasse steht bei diesen Vorrichtungen das Problem gegenüber, daß eine beliebige Vergrößerung der Ausgangsspannungen der Unterwerke mit den bis heute zur Verfügung stehenden Langstatorwicklungen bzw. deren Isolierungen nicht möglich ist. Eine Folge davon ist, daß die erreichbaren Spannungsgrenzen z. B. bei ca. 10 kV bis 20 kV liegen. In Verbindung mit den üblicherweise vorgesehenen maximalen Strömen von ca. 1000 A und mit Fahrzeugen, deren Erregeranordnungen z. B. 10 Sektionen mit Längen von je 25 m aufweisen, lassen sich daher Geschwindigkeiten von maximal ca. 400 km/h erreichen. Höhere Maximalgeschwindigkeiten können nur mit kürzeren Zügen erreicht, längere Züge dagegen können nur bei kleineren Maximalgeschwindigkeiten realisiert werden.

Weiterhin ist aus der US-PS 5 361 707 eine Vorrichtung zum Betreiben eines Magnetfahrzeugs bekannt, die einen Langstator-Linearmotor mit einer längs einer Trasse angeordneten Langstatorwicklung aufweist. Diese ist in Wicklungsabschnitte aufgeteilt, deren Länge kleiner als die des Fahrzeugs ist. Die Wicklungsabschnitte werden mittels entlang der Trasse verlaufenden Speiseleitungen und Schaltelementen, entsprechend der Fortbewegung des Fahrzeugs, mit elektrischer Energie versorgt. Dasselbe gilt für bekannte synchrone Langstator-Linearmotoren (DE 28 06 601 A1), bei denen die einzelnen Wicklungsabschnitte der Langstatorwicklung Längen aufweisen, die einem Bruchteil der Länge der Erregeranordnung entsprechen. Die Wicklungsabschnitte werden hierbei von Wechselrichtern gespeist, die ihnen örtlich fest zugeordnet, mit je einer zugeordneten Schalteinrichtung versehen und über ein gemeinsames Streckenkabel an eine Gleichstromquelle angeschlossen sind. Dem Vorteil einer günstigeren Spannungsaufteilung auf mehrere Wicklungsabschnitte steht hier der Nachteil gegenüber, daß wegen der Mehrzahl der Wechselrichter und Schalteinrichtungen pro Fahrzeuglänge ein hoher apparativer Aufwand längs der Trasse erforderlich ist.

Ausgehend davon liegt der Erfindung die Aufgabe zugrunde, das beschriebene Spannungs- und Leistungsproblem trotz Anwendung herkömmlicher Langstatorwicklungen ohne Vergrößerung der an den Ausgängen der Unterwerke erscheinenden maximalen Spannungen und ohne drastische Erhöhung des konstruktiven Aufwandes dahingehend zu lösen, daß bei gleicher Fahrzeuglänge höhere Geschwindigkeiten erreicht und/oder bei gleicher Fahrtgeschwindigkeit längere Erregeranordnungen und damit längere Fahrzeuge vorgesehen werden können.

Zur Lösung dieser Aufgabe dienen die kennzeichnenden Merkmale des Anspruchs 1.

Durch die erfindungsgemäße Unterteilung der Langstatorwicklung wird erreicht, daß die von der Erregeranordnung induzierte Spannung an jedem Ort der Trasse auf zwei oder mehr, an je ein separates Unterwerk anschließbare Wicklungsabschnittsteile verteilt wird.

Dadurch ergeben sich, ohne daß eine Vergrößerung der an ein Wicklungsabschnittsteil anzulegenden Maximalspannung erforderlich ist, Spannungs- bzw. Leistungsreserven, die höhere Geschwindigkeiten und/oder größere Fahrzeuglängen ermöglichen. Dennoch kann jeder Wicklungsabschnitt und jedes Wicklungsabschnittsteil eine erheblich größere Länge als die Erregeranordnung aufweisen, so daß die Zahl der längs der Trasse zu installierenden Wechselrichter od. dgl. trotz Vergrößerung der installierten Leistungen vergleichsweise gering bleibt.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 einen schematischen Querschnitt durch ein Magnetschwebefahrzeug und dessen Fahrweg;
Fig. 2 eine perspektivische und teilweise auseinandergezogene Darstellung eines Ausführungsbeispiels für den Aufbau eines Langstators;
Fig. 3 schematisch eine bekannte Vorrichtung zum Betreiben des Magnetschwebefahrzeugs nach Fig. 1;
Fig. 4 schematisch eine Vorrichtung entsprechend Fig. 3, jedoch nach einem ersten Ausführungsbeispiel der Erfindung;
Fig. 5 eine vergrößerte Einzelheit X der Fig. 4;
Fig. 6 bis 8 die Spannungs-, Strom-, und Schubverläufe in Richtung einer Trasse bei Anwendung der Vorrichtung nach Fig. 4 im Bereich von Wechselstellen;
Fig. 9 eine Vorrichtung entsprechend Fig. 3, jedoch nach einem zweiten Ausführungsbeispiel der Erfindung;
Fig. 10 eine vergrößerte Einzelheit Y der Fig. 9; und
Fig. 11 bis 13 den Fig. 6 bis 8 entsprechende Darstellungen bei Anwendung der Vorrichtung nach Fig. 9.

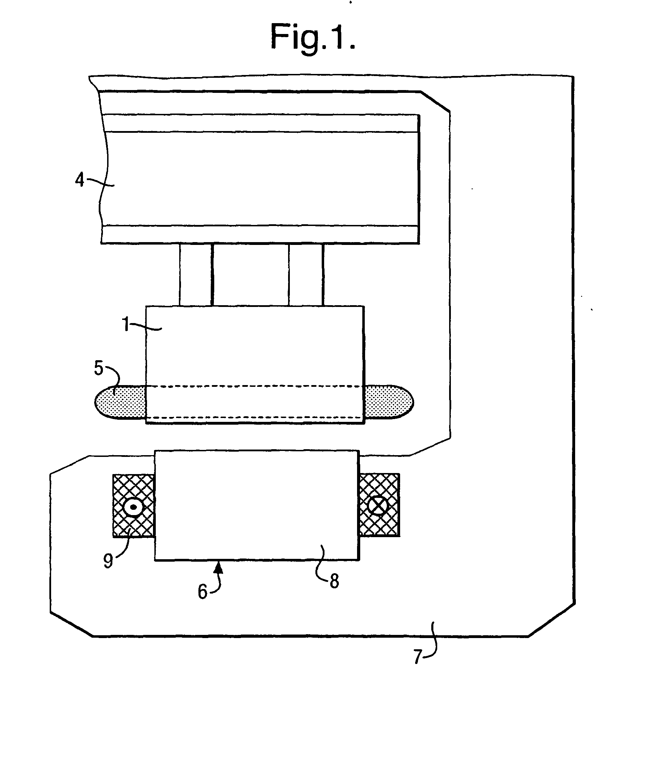

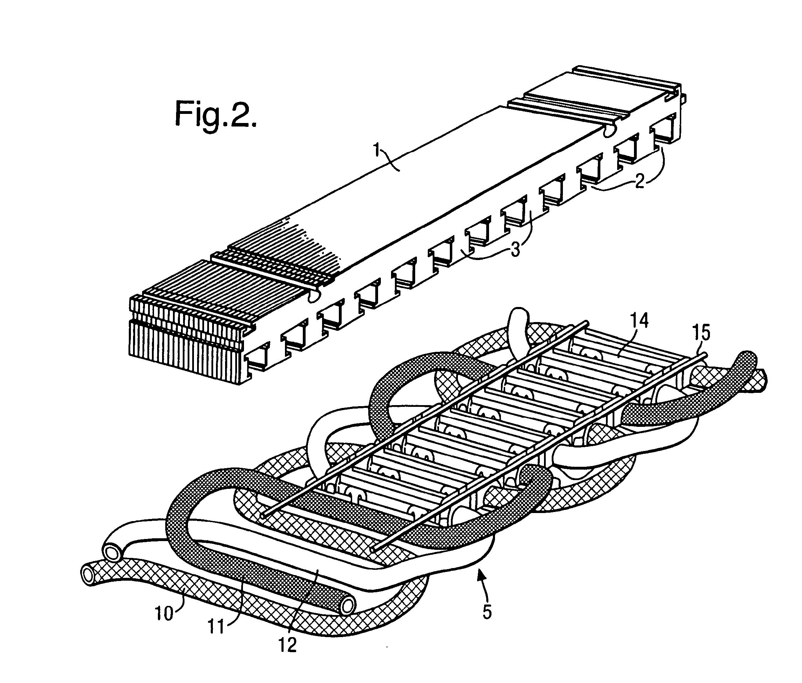

Bei einer Magnetschwebebahn mit einem synchronen Langstator-Linearmotor (Fig. 1 und 2) ist ein Statorblechpaket 1, das eine Vielzahl von aufeinander folgend angeordneten Nuten 2 und Zähnen 3 aufweist, ortsfest mit einem längs einer vorgegebenen Trasse errichteten Fahrweg 4 verbunden. In die Nuten 2 des Statorblechpakets 1 ist eine Langstatorwicklung 5 in Form einer Drehstromwicklung eingelegt, die von einem Umrichter mit Drehtstrom variabler Amplitude und Frequenz gespeist wird, wodurch sich in bekannter Weise eine fortschreitende Strombelagswelle längs des Langstator-Linearmotors ausbildet. Das Erregerfeld des Langstator-Linearmotors wird durch eine Erregeranordnung 6 erzeugt, die aus einer Vielzahl von an einem Fahrzeug 7 montierten, in dessen Längsrichtung verteilt angeordneten und gleichzeitig die Funktion des Tragens erfüllenden Magneten gebildet ist, die aus je einem Magnetkern 8 und einer Erregerwicklung 9 bestehen.

In der Regel ist auf beiden Seiten des Fahrwegs 4 je ein Statorblechpaket 1 mit je einer normalerweise dreiphasigen Langstatorwicklung 5 und jeweils einer zugeordneten Erregeranordnung 6 vorgesehen. Ein Ausführungsbeispiel für den Aufbau eines derartigen Langstators zeigt insbesondere Fig. 2, wonach drei zu den drei Phasen R, S und T gehörende Einzelwicklungen 10, 11 und 12 jeweils abwechselnd hintereinander bzw. miteinander verschachtelt angeordnet und durch unterschiedliche Schraffuren gekennzeichnet sind. Dabei ist klar, daß die geraden, parallel zueinander verlaufenden Teile der Einzelwicklungen 10, 11 und 12 im zusammengebauten Zustand des Langstators in je einer zugeordneten Nut 2 des Statorblechpakets 1 zu liegen kommen, in der sie z. B. mittels je einer Halterung 14 festgelegt werden. Die gebogenen, aus den zugeordneten Nuten 2 herausragenden Wicklungsköpfe können mit zusätzlichen, aus einem elektrisch gut leitenden Material bestehenden und der Erdung dienenden Haltebändern 15 versehen sein.

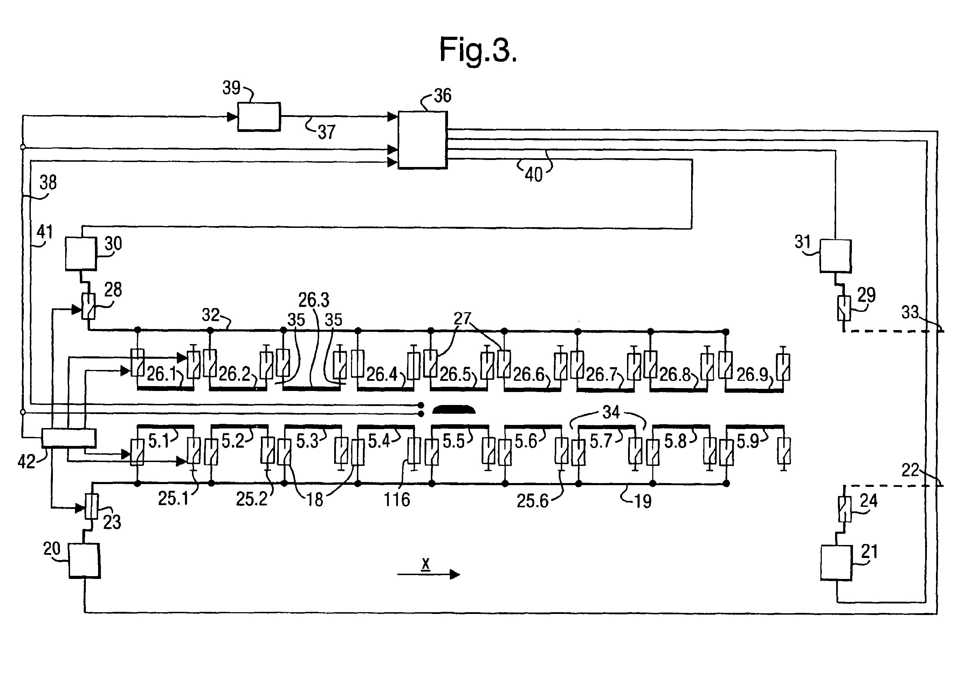

Zur Minimierung des Bedarfs an Blindleistung und Spannung des Langstatormotors wird jeweils nur dasjenige Teilstück der Langstatorwicklung 5 aktiviert (Fig. 3), das gerade von dem z. B. in Richtung des Fahrwegs (Pfeil x) bewegten Fahrzeug 7 befahren wird. Hierzu ist die Langstatorwicklung 5, wie Fig. 3 schematisch zeigt, in eine Vielzahl von in Längsrichtung des Fahrwegs unmittelbar aufeinanderfolgenden Wicklungsabschnitten 5.1 bis 5.9 unterteilt, die über je eine zugeordnete Schalteinrichtung 18 an ein Streckenkabel 19 angeschlossen werden können. In Fig. 3 trifft dies gerade für den Wicklungsabschnitt 5.4 zu. Im Ausführungsbeispiel ist ein Ende des Streckenkabels 19 an einen Umrichter 20 angeschlossen, in dem die zur Einspeisung des Stroms in die Wicklungsabschnitte 5.1 bis 5.9 erforderlichen Einrichtungen enthalten sind. Weitere Umrichter 21 sind an weitere, längs des Fahrwegs folgende Streckenkabel 22 angeschlossen, mit denen in entsprechender Weise nachfolgende Wicklungen des Linearmotors gespeist werden können. Mit Hilfe von Schalteinrichtungen 23, 24 werden die verschiedenen Umrichter 20, 21 immer dann aktiviert, wenn das Fahrzeug 7 in den von einem Umrichter 20, 21 bzw. einem Streckenkabel 19, 22 definierten Abschnitt des Fahrwegs einfährt bzw. diesen verläßt.

Tatsächlich bsteht die Einspeisevorrichtung für die Langstatorwicklung 5 in der Regel nicht nur aus der einspeisenden Schalteinrichtung 18, sondern ebenso aus Schalteinrichtungen 116 zum Erzeugen von Sternpunkten (Fig. 3). Diese sind jedoch für das Verständnis der Erfindung nicht erforderlich.

Die in Fig. 3 dargestellten Wicklungsabschnitte 5.1 bis 5.9 dienen außerdem meistens nur zum Antrieb einer, z. B. der rechten Seite des Fahrzeugs 7. Weitere Wicklungsabschnitte 26.1 bis 26.2 einer Wicklung 26, Schalteinrichtungen 27 bzw. 28 und 29, Umrichter 30, 31 und Streckenkabel 32, 33 dienen in entsprechender Weise zum Antrieb der linken Fahrzeugseite. Dabei sind die Wicklungsabschnitte 5.1 bis 5.9 zu den Wicklungsabschnitten 26.1 bis 26.9 vorzugsweise jeweils um wenigstens eine Fahrzeuglänge in x-Richtung versetzt, um die Anwendung des sogenannten Wechselschritt-Verfahrens zu ermöglichen.

Dieses besteht darin, daß die Schalteinrichtungen 18 bzw. 27 abwechselnd immer dann betätigt werden, wenn sich eine Wechselstelle 34 bzw. 35 zwischen zwei hintereinander angeordneten Wicklungsabschnitten etwa in der Fahrzeugmitte befindet.

Zur Steuerung der beschriebenen Magnetschwebebahn dient ein Geschwindigkeits- bzw. Stromregler 36, dem über eine Leitung 37 ein Sollwert für die jeweils zu erzielende bzw. einzuhaltende Geschwindigkeit des Fahrzeugs 7 und über eine Leitung 38 das vom Fahrzeug 7 z. B. per Funk übermittelte aktuelle Ortssignal zugeführt werden. Die Sollwerte für die Geschwindigkeit sind in einem Sollwert-Speicher 39 abgelegt, dem ebenfalls das Ortssignal zugeführt wird und der einen für den jeweils befahrenen Wicklungsabschnitt vorgegebenen Geschwindigkeits- oder Strom-Sollwert abgibt.

Der Stromregler 36 liefert an Ausgängen 40 Sollwerte, die z. B. aus Spannungs-Sollwerten bestehen und den Umrichtern 20, 21, 30 und 31 zugeführt werden, um in diesen die an die Streckenkabel anzulegenden Spannungen zu erzeugen bzw. um in die Wicklungsabschnitte die zur Erzielung der Nenngeschwindigkeit erforderlichen Ströme einzuspeisen. Mittels des am Fahrzeug 7 ermittelten Geschwindigkeit-Istsignals, das in einer Leitung 41 erscheint, überprüft der Geschwindigkeitsregler 36 die Einhaltung der vorgeschriebenen Nenngeschwindigkeit.

Schließlich ist in Fig. 3 eine mit der Leitung 38 verbundene Steuervorrichtung 42 angedeutet, mittels derer die verschiedenen Schalteinrichtungen 18, 23, 24, 27, 28 und 29 in Abhängigkeit von der Ist-Position des Fahrzeugs 7 in x-Richtung so gesteuert werden, daß stets nur die gerade befahrenen Wicklungsabschnitte und die zugehörigen Umrichter an die verschiedenen Streckenkabel angeschlossen sind.

Vorrichtungen der beschriebenen Art und ihre Funktion sind allgemein aus den Druckschriften DE-OS 29 32 764 A2, DE 30 06 382 C2, DE 33 03 961 A1, DE 39 17 058 A1, US-PS 4 665 329, US-PS 4 728 382 sowie dem Sonderdruck aus etz, Bd. 108, Heft 9, Seiten 1 - 24 bekannt, die daher zur Vermeidung von Wiederholungen durch Bezugnahme auf sie zum Gegenstand der vorliegenden Offenbarung gemacht werden.

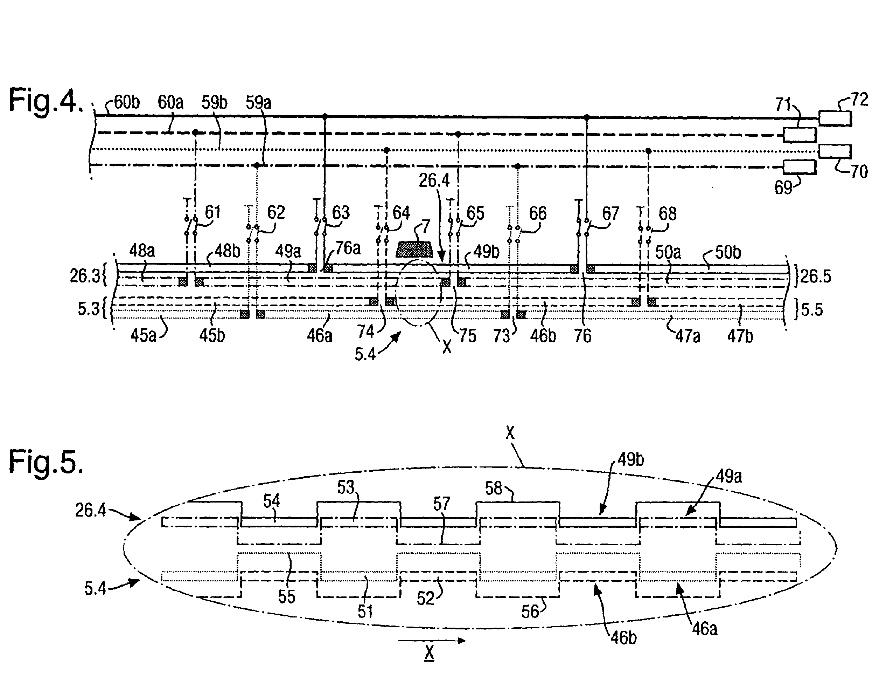

Fig. 4 zeigt schematisch nur die Wicklungsabschnitte 5.3, 5.4 und 5.5 der in Fig. 3 dargestellten rechten Wicklung 5 sowie die zugehörigen Wicklungsabschnitte 26.3, 26.4 und 26.5 der in Fig. 3 gezeigten linken Wicklung 26. Dabei weist jeder der Wicklungsabschnitte 5.3, 5.4, 5.5 usw. je ein erstes Wicklungsabschnittsteil 45a, 46a und 47a und je ein zweites Wicklungsabschnittteil 45b, 46b und 47b usw. auf, während jeder der Wicklungsabschnitte 26.3 bis 26.5 usw. entsprechend je ein erstes und zweites Wicklungsabschnittsteil 48a, 49a, 50a bzw. 48b, 49b und 50b usw. enthält. Zum besseren Verständnis sind in Fig. 4 und 5 auf der rechten Statorseite die ersten Wicklungsabschnittsteile 45a, 46a und 47a mit gepunkteten Linien und die zweiten Wicklungsabschnittsteile 45b, 46b und 47b mit gestrichelten Linien, auf der linken Statorseite dagegen die ersten Wicklungsabschnittsteile 48a, 49a und 50a mit strichpunktierten Linien und die zweiten Wicklungsabschnittsteile 48b, 49b und 50b mit durchgezogenen Linien dargestellt.

Gemäß Fig. 5 ist jeder der Wicklungsabschnittsteile 46a, 46b, 49a und 49b in Längsrichtung x des Langstator-Linearmotors in eine Vielzahl von Wicklungs-Teilstücken unterteilt. Dabei sind erste Teilstücke des ersten Wicklungsabschnittsteils 46a mit dem Bezugszeichen 51, zweite Teilstücke des Wicklungsabschnittsteils 46b mit dem Bezugszeichen 52, erste Teilstücke des ersten Wicklungsabschnittsteils 49a mit dem Bezugszeichen 53 und zweite Teilstücke des zweiten Wicklungsabschnittsteils 49b mit dem Bezugszeichen 54 versehen. Außerdem zeigt Fig. 5, daß die Teilstücke 51 durch Leitungen 55, die Teilstücke 52 durch Leitungen 56, die Teilstücke 53 durch Leitungen 57 und die Teilstücke 54 durch Leitungen 58 jeweils elektrisch leitend und hier in Reihenschaltung miteinander verbunden sind. Die übrigen, in Fig. 5 nicht sichtbaren Wicklungsabschnittsteile sind in entsprechender Weise unterteilt. Jedes erste Wicklungsabschnittsteil (z.B. 46a) besteht daher aus Teilstücken (z.B. 51), die in ausgewählten Nuten des Statorblechpakets 1 liegen und im Bereich der frei bleibenden Nuten 2 durch die Leitungen (z.B. 55) verbunden sind, während die zweiten Wicklungsabschnittsteile (z.B. 46b) aus Teilstücken (z.B. 52) bestehen, die in den von den ersten Teilstücken frei gelassenen Nuten 2 liegen und im Bereich der restlichen Nuten durch weitere Leitungen (z.B. 56) verbunden sind, so daß die ersten und zweiten Wicklungsabschnittsteile jeweils elektrisch voneinander getrennte Systeme bilden.

Fig. 4 und 5 zeigen die erfindungsgemäße Unterteilung nur grob schematisch und für eine Phase des Drehstroms. Tatsächlich sind die einzelnen Wicklungs-Teilstücke 51 bis 54 analog zu Fig. 2 verlegt, indem z. B. in den Nuten 2 des Statorblechpakets 1 der rechten Statorseite abwechselnd Teilstücke 51 und 52 aller drei Phasen und entsprechend in den Nuten 2 des Statorblechpakets 1 der linken Statorseite abwechselnd Teilstücke 53 und 54 aller drei Phasen montiert werden. Alternativ wäre es aber auch möglich, wie in Fig. 4 und 5 durch die Längen der Teilstücke 51 bis 54 im Vergleich zur Länge des Fahrzeugs 7 bzw. der im wesentlichen gleich großen Länge der Erregeranordnung 6 (Fig. 1) angedeutet ist, z. B. die ersten Teilstücke 51 und 53 der ersten Wicklungsabschnittsteile 46a, 49a hintereinander in jeweils zwei, drei oder mehr Nuten 2 einzulegen, dann entsprechend viele Nuten 2 frei zu lassen und die ersten Teilstücke 51 und 53 der Wicklungsabschnittsteile 46a, 49a danach erneut jeweils in zwei, drei oder mehr Nuten 2 einzulegen. Die dadurch zwischen den Teilstücken 51, 53 entstehenden Lücken werden anschließend mit den zweiten Teilstücken 52, 54 der beiden zweiten Wicklungsabschnittsteile 46b und 49b gefüllt, so daß in Längsrichtung x abwechselnd Teilstücke 51, 52 bzw. 53, 54 aufeinander folgen, die Längen aufweisen, die einem ganzzahligen Vielfachen einer Zahn/Nut-Teilung entsprechen. Insgesamt besitzen die einzelen Teilstücke 51 bis 54, die vorzugsweise sämtlich gleich lang sind, erfindungsgemäß jedoch nur eine Länge, die kleiner und vorzugsweise wesentlich kleiner als die Länge der Erregeranordnungen 6 des Fahrzeugs 7 ist.

Die einzelnen Wicklungsabschnittsteile 45a und 45b bis 50a, 50b sind in der aus Fig. 4 ersichtlichen Weise an Streckenkabel 59a, 59b bzw. 60a, 60b anschließbar, wobei das Streckenkabel 59a den Wicklungsabschnittsteilen 45a, 46a und 47a, das Streckenkabel 59b den Wicklungsabschnittsteilen 45b, 46b und 47b und entsprechend die Steckenkabel 60a, 60b den Wicklungsabschnittsteilen 48a, 48b bis 50a, 50b zugeordnet sind. Die Streckenkabel sind daher wie die zugehörigen Wicklungsabschnittsteile gepunktet, gestrichelt usw. dargestellt. Zwischen die einzelnen Wicklungsabschnittsteile 45a bis 50b und die Streckenkabel 59a,b bzw. 60a,b sind jeweils erste bzw. zweite Schalteinrichtungen 61 bis 68 geschaltet. Dabei entsprechen die ersten bzw. zweiten Schalteinrichtungen 62, 66 bzw. 64, 68 den Schalteinrichtungen 18 nach Fig. 3 und die ersten und zweiten Schalteinrichtungen 61, 65 bzw. 63, 67 den Schalteinrichtungen 27 nach Fig. 3 bis auf den Unterschied, daß für jede Schalteinrichtung 18, 27 in Fig. 3 je zwei Schalteinrichtungen 62, 64 bzw. 66, 68 bzw. 61, 63 bzw. 65, 67 in Fig. 4 vorhanden sind, da jeder Wicklungsabschnitt 5.1 bis 5.9 bzw. 26.1 bis 26.9 in Fig. 4 in je zwei Wicklungsabschnittsteile (z. B. 45a, 45b) unterteilt ist. Schließlich ist jedes Streckenkabel 59a, b bzw. 60a, b mit einem ihm einzeln zugeordneten, den Unterwerken 20, 21 bzw. 30, 31 nach Fig. 3 entsprechenden Umrichtern 69 bis 72 verbunden, so daß jedem der ersten und zweiten Wicklungsabschnittsteile jeweils ein separater Umrichter zugeordnet ist.

Die einzelnen Wicklungsabschnittsteile 45a, 45b bis 50a, 50b sind in x-Richtung der Trasse vorzugsweise in der aus Fig. 4 ersichtlichen Weise relativ zueinander versetzt, so daß den Wechselstellen 34, 35 nach Fig. 3 entsprechende Wechselstellen 73 bis 76 zwischen den einzelnen Wicklungsabschnittsteilen 45a, b bis 50a, b in entsprechender Weise in x-Richtung zueinander versetzt sind. Dieser Versatz ist vorzugsweise derart gewählt, daß der Abstand der einzelnen Wechselstellen 73 bis 76 voneinander wenigstens gleich der Länge der längsten Erregeranordnung 6 am Fahrzeug 7 ist.

Die Schalteinrichtungen 61 bis 68 werden mit Hilfe einer der Steuervorrichtung 42 nach Fig. 3 analogen Steuervorrichtung im Takt des in x-Richtung bewegten Fahrzeugs 7 z.B. wie folgt weitergeschaltet:

Es sei angenommen, daß sich das Fahrzeug 7 gerade kurz vor der Wechselstelle 75 zwischen den Wicklungsabschnittsteilen 49a und 50a befindet. Das Wicklungsabschnittsteil 49a mit seinen Teilstücken 53 ist zu diesem Zeitpunkt mittels der Schalteinrichtung 61 an das Streckenkabel 60a angeschlossen, während das Wicklungsabschnittsteil 50a noch abgeschaltet ist. Außerdem sind die zugehörigen Wicklungsabschnittsteile 46a, 46b und 49b über die geschlossenen Schalteinrichtungen 62, 64 und 63 mit den zugehörigen Streckenkabeln 59a, 59b und 60b verbunden, so daß alle vier Wicklungsabschnittsteile 46a, 46b, 49a und 49b an eines der Unterwerke 69 bis 72 angeschlossen sind und das Fahrzeug 7 mit maximaler Leistung betrieben werden kann.

Beim Passieren der Wechselstelle 75 wird das Wicklungsabschnittsteil 49a durch Öffnung der Schalteinrichtung 61 abgeschaltet und das Wicklungsabschnittsteil 50a durch Schließen der Schalteinrichtung 65 zugeschaltet, so daß jetzt die vier Wicklungsabschnittsteile 46a, 46b, 50a und 49b an die Unterwerke 69 bis 72 angeschlossen sind. Entsprechend wird beim Erreichen der im x-Richtung nächsten Wechselstelle 73 zwischen den Wicklungsabschnittsteilen 46a und 47a die Schalteinrichtung 62 in den geöffneten und die Schalteinrichtung 66 in den geschlossenen Zustand versetzt, so daß danach die Wicklungsabschnittsteile 47a, 46b, 50a und 49b an die Unterwerke 69 bis 72 angeschlossen sind. Bei den beiden nächsten Wechselstellen erfolgen analoge Schaltvorgänge, so daß danach für die Wicklungsabschnittsteile 47a, 47b, 50a und 50b und die Schalteinrichtungen 65 bis 68 derselbe Zustand vorliegt, wie in Fig. 4 für die Wicklungsabschnittsteile 46a, 46b, 49a, 49b und die Schalteinrichtungen 61 bis 64 angedeutet ist. Die beschriebenen Schaltvorgänge wiederholen sich längs der gesamten Trasse, wobei zusätzlich eine Vielzahl von Langstatorwicklungen 5 bzw. 26 aufeinander folgen kann, wie in Fig. 3 durch die zusätzlichen Streckenkabel 22, 33 und Schalteinrichtungen 24, 29 angedeutet ist.

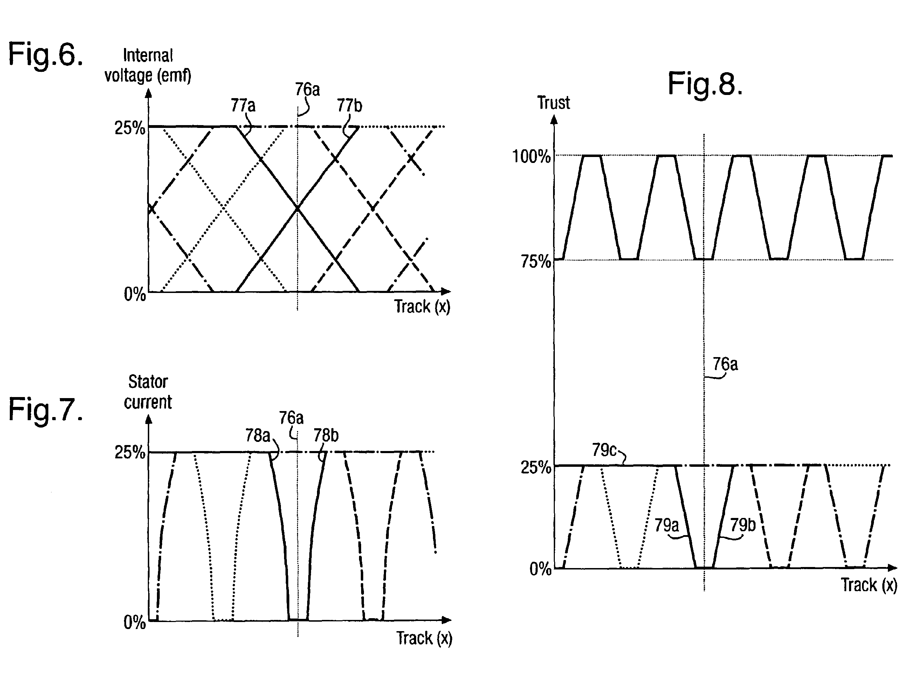

Tatsächlich erfolgen die beschriebenen Umschaltungen vorzugsweise nicht unter Last, sondern wie beim bekannten Wechselschrittverfahren bei abgeschalteter Stromzufuhr, wie sich aus Fig. 6 bis 8 zum Beispiel für die durch eine vertikale Linie angedeutete Wechselstelle 76a zwischen den Wicklungsabschnittsteilen 48b und 49b der Fig. 4 ergibt. Dabei sind in Fig. 6 bis 8 die den verschiedenen Streckenkabeln bzw. Wicklungsabschnittsteilen zugeordneten Linien entsprechend Fig. 4 und 5 punktiert, gestrichelt, strichpunktiert bzw. durchgezogen dargestellt.

Wie Fig. 6 zeigt, nimmt die vom Fahrzeug 7 induzierte Spannung beim Passieren der Wechselstelle 76a allmählich ab, da ein immer größer werdender Teil des Fahrzeugs 7 das zunächst allein eingeschaltete Wicklungsabschnittsteil 48b verläßt, während der bereits auf den Wicklungsabschnittsteil 49b übergewechselte Fahrzeugabschnitt die dort induzierte Spannung allmählich vergrößert (Linien 77a und 77b). Parallel dazu wird gemäß Fig. 7 der in das Wicklungsabschnittsteil 48b eingespeiste Strom durch Herunterfahren des zugehörigen Umrichters 72 allmählich bis auf den Wert Null reduziert (Linie 78a), was kurz vor der Kreuzungsstelle der beiden Linien 77a und 77b, d. h. dann abgeschlossen ist, wenn das Fahrzeug 7 die Wechselstelle 76a zur Hälfte überfahren hat.

Es wird nun die in Fig. 4 nicht sichtbare, dem Wicklungsabschnittsteil 48b zugeordnete Schalteinrichtung in den offenen und die nachfolgende Schalteinrichtung 63 in den geschlossenen Zustand geschaltet, um den Wicklungsabschnittsteil 49b anstelle des Wicklungsabschnittsteils 48b mit dem zugeordneten Streckenkabel 60b und dem Umrichter 72 zu verbinden. Danach wird der Strom durch Herauffahren des Umrichters 72 wieder bis auf den Maximalwert erhöht (Linie 78b in Fig. 7). Die Schubkraft verhält sich proportional zur induzierten Polradspannung (Induktion) und proportional zum Statorstrom. Insgesamt tritt daher im Bereich der Wechselstelle 76a ein momentaner Verlust an Schubkraft um maximal 25 % ein, wie in Fig. 8 schematisch dargestellt ist. Ist nämlich, wie oben erwähnt wurde, der Abstand der verschiedenen Wechselstellen 73 bis 76 voneinander größer als die Länge der längsten Erregeranordnung 6 des Fahrzeugs 7, dann kann sich das Fahrzeug 7 an irgendeinem Ort längs der Trasse stets nur im Bereich einer einzigen Wechselstelle befinden, so daß es von drei Wicklungsabschnittsteilen stets den vollen Schub und von den an die zugehörige Wechselstelle grenzenden Wicklungsabschnittsteilen den aus Fig. 8 (unten) ersichtlichen Teilschub erfährt. Gemäß dem unteren Teil der Fig. 8 liefern daher z. B. die Wicklungsabschnittsteile 48b, 49b im Bereich der Wechselstelle 76a einen momentan bis auf den Wert Null abfallenden Beitrag zum Schub (Linien 79a, 79b), außerhalb der Wechselstelle 76a dagegen einen Anteil von 25 % (Linie 79c). Die Schubkraftsumme von allen vier beteiligten Wicklungsabschnittsteilen liegt daher entsprechend dem oberen Teil der Fig. 8 stets zwischen 75 % und 100 % des maximal mit den Unterwerken 69 bis 72 erzielbaren Schubs.

Die anhand der Fig. 4 bis 8 beschriebene Erfindung bringt den Vorteil mit sich, daß bei gleicher Länge der Wicklungsabschnitte im wesentlichen die doppelte Leistung zur Verfügung gestellt werden kann. Da jeder Wicklungsabschnitt aus zwei Wicklungsabschnittsteilen zugesammengesetzt ist, die dieselbe Geometrie wie die bisherigen Wicklungsabschnitte aufweisen und daher an derselben Spannungsgrenze wie diese betrieben werden können, kann pro Statorseite z. B. 2 x 20 kV statt bisher nur 1 x 20 kV wirksam gemacht werden. Dadurch ist eine wesentliche Vergrößerung der Fahrtgeschwindigkeit und/oder Fahrzeuglänge möglich. Hinsichtlich des maximal möglichen Statorstroms brauchen keine Einschränkungen hingenommen werden, da die Trafoübersetzung der Umrichter nicht erhöht werden muß. Vorteilhaft ist auch, daß sich die von den beiden Unterwerken pro Statorseite gelieferten Leistungen gleichmäßig über die Erregeranordnungen 6 verteilen. Dies wird im wesentlichen dadurch erreicht, daß jedes Wicklungsabschnittsteil in viele einzelne, abwechselnd aufeinander folgende Wicklungs-Teilstücke unterteilt wird und dabei die Wicklungsabschnitte in jedem beliebigen, längs der Trasse gedachten Sektor, der eine der Erregeranordnungen 6 entsprechende Länge besitzt, mehrere erste Teilstücke 51 bzw. 53 und zweite Teilstücke 52 bzw. 54 enthält. Schließlich ist vorteilhaft, daß die gewählte Anordnung im Bereich der Wechselstellen nur zu Schubkrafteinbrüchen von jeweils 100 % auf 75 % führt, während bei Anwendung des Wechselschrittverfahrens auf herkömmliche Langstator-Linearmotoren ein Schubkrafteinbruch auf 50 % eintritt. Der Mehrbedarf an Umrichtern bzw. deren Verdopplung kann daher in Kauf genommen werden.

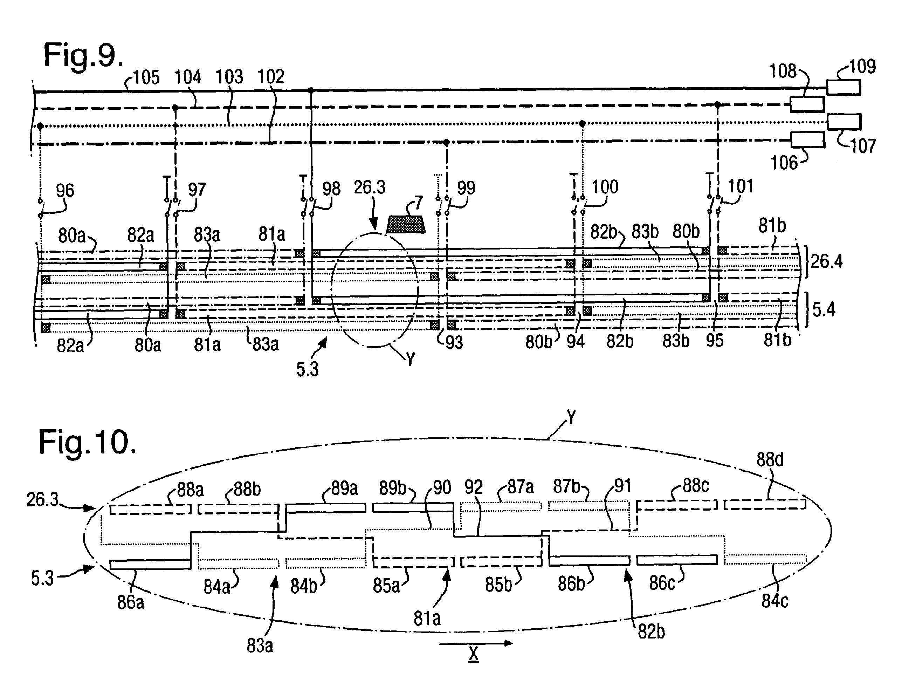

Das nachfolgend anhand der Fig. 9 bis 13 beschriebene Ausführungsbeispiel der Erfindung betrifft eine Vorrichtung, bei der die beiden Statorseiten nach Fig. 3 stets nur mit insgesamt drei anstatt wie in Fig. 4 mit vier Wicklungsabschnittsteilen gleichzeitig betrieben werden. Dies wird im wesentlichen dadurch erreicht, daß die vorhandenen Wicklungsabschnittsteile von beiden Statorseiten gemeinsam benutzt werden.

Fig. 9 zeigt zwei Wicklungsabschnitte 5.3 und 5.4 der rechten Wicklung 5 und die zugehörigen beiden Wicklungsabschnitte 26.3 und 26.4 der linken Wicklung 26 des Langstator-Linearmotors. Dabei ist jeder der rechten Wicklungsabschnitte 5.3 bzw. 5.4 aus je drei Wicklungsabschnittsteilen 81a, 82b und 83a bzw. 80b, 81b, 83b und jeder der linken Wicklungsabschnitte 26.3 bzw. 26.4 aus denselben drei Wicklungsabschnittsteilen 81a, 82b, 83a bzw. 80b, 81b, 83b zusammengesetzt, wobei sich in Fig. 9 nach links weitere, entsprechende Wicklungsabschnittsteile (z.B. 80a, 82a usw.) anschließen, die zu weiteren Wicklungsabschnitten gemäß Fig. 3 gehören. Zum besseren Verständnis sind in Fig. 9 und 10 erste Wicklungsabschnittsteile 80a, 80b mit strichpunktierten Linien, zweite Wicklungsabschnittsteile 81a, 81b mit gestrichelten Linien, dritte Wicklungsabschnittsteile 82a, 82b mit durchgezogenen Linien und vierte Wicklungsabschnitte 83a, 83b gepunktet dargestellt. Damit soll hervorgehoben werden, daß sowohl die rechte als auch die linke Langstatorwicklung 5 bzw. 26 aus denselben Wicklungsabschnittsteilen zusammengesetzt ist.

Gemäß Fig. 10 ist jeder der Wicklungsabschnittsteile 81a, 82b und 83a in Längsrichtung x in eine Vielzahl von Wicklungs-Teilstücken unterteilt. Teile der Wicklungsteilabschnitte 80 sind an dieser Stelle nicht vorhanden. Dabei sind auf der rechten Statorseite zweite Teilstücke des zweiten Wicklungsabschnittsteils 81a mit den Bezugszeichen 85a und 85b, dritte Teilstücke des dritten Wicklungsabschnittsteils 82b mit den Bezugszeichen 86a, 86b und 86c und vierte Teilstücke des vierten Wicklungsabschnittsteil 83a mit den Bezugszeichen 84a, 84b und 84c bezeichnet, während auf der linken Statorseite die Wicklungsabschnittsteile 81a bzw. 82b bzw. 83a entsprechende zweite bzw. dritte bzw. vierte Teilstücke 88a bis 88d, 89a, 89b und 87a, 87b aufweisen. Die Wicklungsabschnittsteile 80a, 80b, 81b, 82a und 83b usw. sind entsprechend ausgebildet, wobei die ersten Wicklungsabschnittsteile 80a, 80b in abwechselnd rechts und links liegende erste Teilstücke unterteilt sind.

Analog zu Fig. 5 sind die Teilstücke 84a, 84b bzw. 85a, 85b bzw. 88a, 88b usw. untereinander durch nicht näher dargestellte Leitungen elektrisch leitend und hier in Reihenschaltung miteinander verbunden. Im Gegensatz zu Fig. 5 ist außerdem z. B. das Teilstück 84b der rechten Statorseite durch eine Leitung 90 elektrisch mit dem Teilstück 87a der linken Seite, das Teilstück 85b der rechten Seite durch eine Leitung 91 elektrisch mit dem Teilstück 88c der linken Seite, das Teilstück 89b der linken Seite durch eine Leitung 92 elektrisch mit dem Teilstück 86b der rechten Seite usw. verbunden. Schließlich sind die verschiedenen Teilstücke längs der Trasse (x-Richtung) so angeordnet, daß z. B. auf der rechten Statorseite abwechselnd zwei Teilstücke (z. B. 84a, 84b) des vierten Wicklungsabschnittsteils (z. B. 83a), dann zwei Teilstücke (z. B. 85a, 85b) des zweiten Wicklungsabschnittsteils (z. B. 81a) und danach zwei Teilstücke (z. B. 86b, 86c) des dritten Wicklungsabschnittsteils (z. B. 82b) aufeinander folgen und danach dieselbe Reihenfolge erneut beginnt (z. B. mit dem Teilstück 84c). Auf der anderen Statorseite ist die Reihenfolge entsprechend (z. B. 88a, 88b, 89a, 89b, 87a, 87b, 88c, 88d). Beachtlich dabei ist jedoch, daß zwischen zueinander gehörenden Teilstücken der rechten Seite (z. B. 84a, 84b) und den entsprechenden, ebenfalls zueinander gehörenden Teilstücken der linken Seite (z. B. 87a, 87b) jeweils eine in Fig. 10 durch Verbindungsleitungen (z. B. 90) dargestellte Lücke besteht, die von Teilstücken (z. B. 85a, 89b) der anderen Wicklungsabschnittsteile ausgefüllt ist.

Aufgrund der beschriebenen Unterteilungen setzt sich das vierte Wicklungsabschnittsteil 83a aus den rechts liegenden vierten Teilstücken 84a und 84b, den links liegenden vierten Teilstücken 87a und 87b, dem rechts liegenden vierten Teilstück 84c usw. zusammen, wobei alle diese Teilstücke in Serienschaltung verbunden sind. Entsprechendes gilt für das zweite Wicklungsabschnittsteil 81a (zwei zweite Teilstücke 88a und 88b links, dann zwei zweite Teilstücke 85a und 85b rechts, dann wieder zwei zweite Teilstücke 88c und 88d links usw.) und für das dritte Wicklungsabschnittsteil 82b (drittes Teilstück 86a rechts bzw. dritte Teilstücke 89a, 89b links bzw. 86b, 86c rechts usw.). Die drei Wicklungsabschnittsteile 83a, 81a, 82b usw. bilden daher jeweils drei elektrisch voneinander getrennte Systeme.

Die Länge der Teilstücke 84a bis 89b usw. ist wie im Fall der Fig. 4 und 5 vorzugsweise wesentlich kleiner als die Länge der kürzesten am Fahrzeug 7 montierten Erregeranordnung 6, während die Gesamtlänge jedes aus den Teilstücken zusammengesetzten Wicklungsabschnittsteils 80a bis 83b usw. vorzugsweise wesentlich größer als die Länge der längsten Erregeranordnung 6 ist. Zweckmäßig sind alle Teilstücke und Wicklungsabschnittsteile außerdem unter sich gleich lang und analog zu Fig. 4 und 5 um so viel relativ zueinander in x-Richtung versetzt, daß Wechselstellen 93, 94 bzw. 95 zwischen den einzelnen Wicklungsabschnittsteilen 83a und 80b bzw. 81a und 83b bzw. 82b und 81b Abstände voneinander aufweisen, die wenigstens gleich oder geringfügig größer sind, als der Länge der längsten Erregeranordnung 6 entspricht.

Die verschiedenen Wicklungsabschnittsteile sind analog zu Fig. 4 über erste, zweite, dritte und vierte Schalteinrichtungen 96 bis 101 an Streckenkabel 102 bis 105 angeschlossen, die mit je einem Umrichter 106 bis 109 verbunden sind. Dabei ist die Anordnung z. B. so, daß eine erste Schalteinrichtung 99 das erste Wicklungsabschnittsteil 80b mit dem Streckenkabel 102 und dem Umrichter 106, eine zweite Schalteinrichtung 97 das zweite Wicklungsabschnittsteil 81a mit dem Streckenkabel 104 und dem Umrichter 108, eine dritte Schalteinrichtung 98 das dritte Wicklungsabschnittsteil 82b mit dem Streckenkabel 105 und dem Umrichter 109 und eine vierte Schalteinrichtung 96 das vierte Wicklungsabschnittsteil 83a mit dem Streckenkabel 103 und dem Umrichter 107 verbinden kann, worauf sich die Reihenfolge der Verbindungen zyklisch wiederholt. Zum besseren Verständnis sind in Fig. 9 sowohl die vier verschiedenen Streckenkabel als auch die vier verschiedenen, mit ihnen verbundenen Schalteinrichtungen durch strichpunktierte, punktierte, gestrichelte bzw. durchgezogene Linien dargestellt.

Die Schalteinrichtungen 96 bis 101 können mit einer der Steuervorrichtung 42 nach Fig. 3 analogen Steuervorrichtung im Takt des in x-Richtung bewegten Fahrzeugs 7 z. B. wie folgt weitergeschaltet werden:

Das Fahrzeug 7 wird z. B. im Bereich des Wicklungsabschnitts 5.3 und kurz vor Erreichen der Wechselstelle 93 zwischen den Wicklungsabschnittsteilen 83a, 80b von den Umrichtern 107, 108 und 109 gespeist, während der Umrichter 106 ungenutzt ist. Nähert sich das Fahrzeug 7 der Wechselstelle 93 zwischen den Wicklungsabschnittsteilen 83a und 80b, so wird die Schalteinrichtung 99 eingeschaltet, um das Wicklungsabschnittsteil 80b dadurch mit dem Streckenkabel 102 und dem Umrichter 106 zu verbinden, während der Umrichter 107 weiterhin aktiv bleibt. Das Fahrzeug 7 wird jetzt von allen Umrichtern 106, 107, 108 und 109 gespeist. Verläßt das Fahrzeug 7 die Wechselstelle 93, so wird der Umrichter 107 mittels der Schalteinrichtung 96 stillgelegt. Nunmehr speisen lediglich die Umrichter 106, 108 und 109 die Wicklungsabschnitte 80b, 81a und 82b. Beim Passieren der nächsten Wechselstelle 94 zwischen den Wicklungsabschnittsteilen 81a und 83b wird entsprechend die Schalteinrichtung 97 in den ausgeschalteten und die Schalteinrichtung 100 des Wicklungsabschnittsteils 83b in den eingeschalteten Zustand gebracht. Dadurch wird der Umrichter 107 wieder aktiviert, der Umrichter 108 dagegen deaktiviert, so daß das Fahrzeug 7 jetzt mit Hilfe der Umrichter 106, 107 und 109 angetrieben wird. Im Bereich der Wechselstelle 95 zwischen den Wicklungsabschnittsteilen 82b und 81b wird der Umrichter 108 zu- und der Umrichter 109 abgeschaltet. Das Fahrzeug 7 wird nun mittels der Umrichter 106, 107 und 108 angetrieben. Nach dem Passieren der in x-Richtung folgenden Wechselstelle ergibt sich wieder eine Einspeisung mittels der Umrichter 107, 108 und 109 usw., so daß außerhalb der Wechselstellen ein Umrichter bzw. ein zugeordnetes Streckenkabel unbenutzt ist. Dieser Zustand kann dazu genutzt werden, wie dies beim sogenannten Dreischrittverfahren üblich ist, jeweils den unbenutzten bzw. in einem Standby-Zustand befindlichen Umrichter für die erforderlichen Schaltvorgänge zu nutzen.

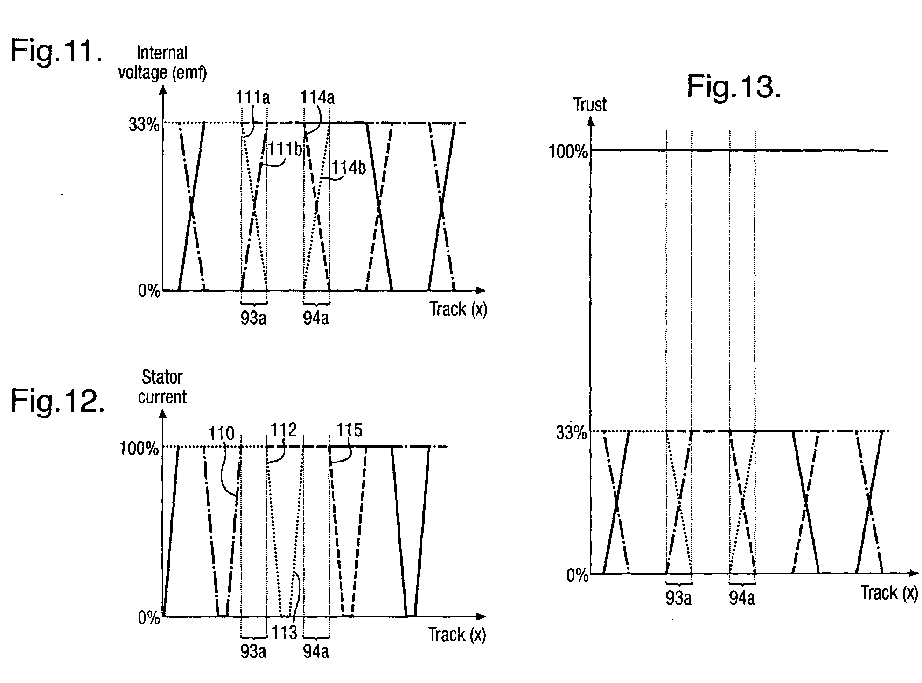

Tatsächlich erfolgen die beschriebenen Umschaltungen analog zu Fig. 4 und 5 bei abgeschalteter Stromzufuhr entsprechend Fig. 11 bis 13, in denen die verschiedenen Linien wiederum strichpunktiert, punktiert usw. dargestellt sind. Im Bereich einer mit senkrechten Linien markierten ersten Wechselstelle 93a zwischen den Wicklungsabschnittsteilen 83a und 80b (Fig. 9) befindet sich das strichpunktierte Streckenkabel 102 und mit ihm der Umrichter 106 im Standby-Zustand. Die Schalteinrichtung 99 wird kurz vor dem Einlaufen des Fahrzeugs 7 in diese Wechselstelle 93a in den geschlossenen Zustand versetzt, wodurch der Wicklungsabschnittsteil 80b an das strichpunktierte Streckenkabel 102 bzw. das Unterwerk 106 angeschlossen wird (Linie 110 in Fig. 12), während das Wicklungsabschnittsteil 83a noch an das punktierte Streckenkabel 103 und der Umrichter 107 angeschlossen bleibt. Infolgedessen nimmt die induzierte Polradspannung beim Passieren der Wechselstelle 93a im Bereich des Wicklungsabschnittsteils 83a allmählich ab und im Bereich des Wicklungsabschnittsteils 80b allmählich zu (Linien 111a, 111b in Fig. 11). Wenn das Fahrzeug 7 die Wechselstelle 93a gänzlich passiert hat, wird der Strom im Wicklungsabschnittsteil 83a bis auf Null reduziert und das Streckenkabel 103 in den Standby-Zustand überführt (Linie 112 in Fig. 12). Danach wird die Schalteinrichtung 96 in den offenen Zustand und die Schalteinrichtung 100 in den geschlossenen Zustand gesteuert, wodurch das Streckenkabel 103 jetzt mit dem Wicklungsabschnittsteil 83b verbunden wird, um diesen auf den nächsten Abschnittsteilwechsel vorzubereiten (Linie 113 in Fig. 12). Läuft das Fahrzeug 7 daher anschließend in die in Fig. 12 mit dem Bezugszeichen 94a bezeichnete Wechselstelle zwischen den Wicklungsabschnittsteilen 81a und 83b (Fig. 9) ein, werden analog zur obigen Beschreibung die Polradspannungen im Wicklungsabschnittsteil 81a kleiner und entsprechend im Wicklungsabschnittsteil 83b größer (Linien 114a, 114b in Fig. 11), bis die Wechselstelle 94a vollständig überfahren ist. Danach wird der Umrichter 108 heruntergefahren, um den Strom im Wicklungsabschnittsteil 81a auf Null zu reduzieren (Linie 115 in Fig. 12), worauf sich die beschriebenen Schaltvorgänge entsprechend der Fortbewegung des Fahrzeugs 7 wiederholen.

Im Gegensatz zum Ausführungsbeispiel nach Fig. 4 bis 8 werden beim Ausführungsbeispiel nach Fig. 9 bis 13 beide Statorseiten von insgesamt drei statt von vier Wicklungsabschnittsteilen 80a, 81a, 82a usw. gebildet. Allerdings ist auch hier jede Statorseite derart in abwechselnd aufeinander folgende Wicklungs-Teilstücke unterteilt, daß die Wicklungsabschnitte auf beiden Statorseiten in jedem beliebigen, längs der Trasse gedachten Sektor, der eine der Erregeranordnungen 6 entsprechende Länge besitzt, mehrere erste, zweite und dritte Teilstücke (z.B. 86a, 84a, 84b, 85a, 85b, 86b, 86c, 84c usw.) enthalten, die unterschiedlichen Wicklungsabschnittsteilen (z.B. 83a, 81a, 82b) angehören. Da wiederum jeder Wicklungsabschnittsteil mit einem separaten Umrichter betrieben wird, kann die dem Fahrzeug zugeführte Leistung zwar nicht verdoppelt, aber um die Hälfte, d. h. z. B. von 1 x 20 kV pro Statorseite auf 3 x 20 kV für beide Statorseiten vergrößert werden. Gegenüber dem Ausführungsbeispiel nach Fig. 4 bis 8 ist damit nur die halbe Vergrößerung der Fahrtgeschwindigkeit bzw. der Fahrzeuglänge möglich. Ein wesentlicher Vorteil besteht allerdings darin, daß sich wegen der Anwendung eines vierten Umrichters das Dreischrittverfahren mit der Folge anwenden läßt, daß im Bereich der Wechselstellen kein Verlust an Schubkraft eintritt (Fig. 13).

Die anhand der Fig. 9 bis 13 beschriebene Verfahrensweise erfordert pro Wicklungsabschnitt einen zusätzlichen Umrichter. Ist dies aus Kostengründen unerwünscht, kann bei der Vorrichtung nach Fig. 9 auch eines der Streckenkabel einschließlich des zugehörigen Umrichters weggelassen werden. In diesem Fall wären die Umschaltungen im Bereich der Wechselstellen z. B. mit Hilfe des Wechselschrittverfahrens erforderlich, so daß sich im Bereich der Wechselstellen analog zu Fig. 6 bis 8 Einbrüche an Schubkraft von jeweils von 100 % auf maximal 67 % der verfügbaren Leistung ergeben würden.

Die Länge der beschriebenen Wicklungs-Teilstücke 51 bis 54 (Fig. 5) und 84 bis 89 (Fig. 10) ist vorzugsweise deutlich kleiner als die Länge der längsten am Fahrzeug 7 vorhandenen Erregeranordnung 6, damit jeder der z. B. zwei oder drei Wicklungsabschnittsteile jeweils etwa mit derselben Länge am Vortrieb des Fahrzeugs beteiligt ist. Die Längen der Teilstücke können insbesondere so klein gehalten werden, wie einer Zahn/Nut-Teilung nach Fig. 2 entspricht, in welchem Fall z. B. die abwechselnd verlegten Einzelwicklungen 10, 11 und 12 in Fig. 2 den Teilstücken 86a, 84a, 84b, 85a usw. bzw. 88a, 88b, 89a, 89b usw. in Fig. 10 entsprechen könnten. Je länger ein einzelnes Teilstück ausgebildet wird, umso ungünstigere Verhältnisse können sich ergeben, insbesondere wenn nicht stets alle Wicklungsabschnittsteile gleichmäßig am Vortrieb beteiligt sind. Teilstücke von der Länge der Erregeranordnungen 6 würden schließlich überhaupt keine Vergrößerung der Geschwindigkeit oder Fahrzeuglänge ermöglichen, so daß sich die obere Grenze der Länge der Teilstücke aus der beabsichtigten Funktion ergibt.

Gemäß einer besonders bevorzugten Ausführungsform der Erfindung werden Teilstücke mit einer Länge von ca. 25 m, d. h. mit einer Länge verwendet, die der Länge von Trägern entspricht, die den Fahrweg 4 (Fig. 1) bilden und an denen die Statorblechpakete 1 befestigt werden. Es ist dann möglich, die Träger im Herstellerwerk komplett mit den Statorblechpaketen 1 und Wicklungen 5 (Fig. 2) auszurüsten, die vorgefertigten Träger längs der Trasse zu montieren und abschließend die Wicklungsabschnittsteile mit Hilfe üblicher Muffen od. dgl. miteinander zu verbinden. Die Längen der Wicklungsabschnitte 5, 26 können wie bisher z. B. ca. 1000 m bis 2000 m oder auch deutlich mehr betragen, da die Impedanz der Wicklung deutlich abnimmt, weil die bewickelten Teilbereiche pro System in Summe deutlich kürzer sind als eine durchgängige Wicklung, in Fig. 4 nur 50 % und in Fig. 9 effektiv 67 %.

Die Erfindung ist nicht auf die beschriebenen Ausführungsbeispiele beschränkt, die auf vielfache Weise abgewandelt werden können. Dies gilt insbesondere für die Zahl der im Einzelfall pro Statorseite verwendeten Wicklungsabschnittsteile. Insbesondere wäre es möglich, die Fahrzeuge 7 mit nur einer Statorwicklung anzutreiben und diese entsprechend der obigen Beschreibung in einzelne Wicklungsabschnitte zu unterteilen, die ihrerseits aus Wicklungsabschnittsteilen mit abwechselnd aufeinander folgenden Teilstücken zusammengesetzt werden, wobei abweichend von Fig. 4 bis 8 auch mehr als zwei Wicklungsabschnittsteile pro Wicklungsabschnitt vorgesehen werden können. Weiter ist es möglich, die verschiedenen Teilstücke eines Wicklungsabschnittsteils zumindest auf einem Teil von deren Länge in Parallel- anstatt in Reihenschaltung miteinander zu verbinden, indem in Fig. 4 die von einer Schalteinrichtung (z. B. 62) kommenden Leitungen nicht nur mit dem einen Ende eines zugehörigen Wicklungsabschnittsteils (z. B. 46a), sondern z. B. parallel mit dessen in diesem Falle elektrisch getrennten Teilstücken (z. B. 51) verbunden werden. Weiter ist es möglich, alle drei Phasen eines Dreiphasensystems in der aus Fig. 4 bis 13 ersichtlichen Weise auszubilden und dabei die zu den drei Phasen gehörenden Teilstücke entsprechend so zu verschachteln, daß zwischen den Teilstücken einer Phase jeweils die Teilstücke der beiden anderen Phasen zu liegen kommen. Weiter können andere als die aus Fig. 5 und 10 ersichtlichen Unterteilungen vorgenommen werden. Dies gilt insbesondere für das Ausführungsbeispiel nach Fig. 9 und 10. Hier könnten z. B. alle Teilstücke eines Wicklungsabschnittsteils (z. B. 83a oder 81a) nur auf je einer zugeordneten Statorseite angeordnet sein, während die Teilstücke des dritten Wicklungsabschnittsteils (z. B. 82b) analog zu Fig. 10 teils auf der einen und teils auf der anderen Statorseite liegen würden. Schließlich versteht sich, daß die verschiedenen Merkmale auch in anderen als den dargestellten und beschriebenen Kombinationen angewendet werden können.

## Patentansprüche

1. Vorrichtung zum Betreiben eines Magnetfahrzeugs (7), insbesondere eines Magnetschwebefahrzeugs, enthaltend: einen synchronen Langstator-Linearmotor mit wenigstens einer längs einer Trasse verlegten Langstatorwicklung (5, 26) und wenigstens einer mit dieser wechselwirkenden, in Richtung der Trasse erstreckten, am Fahrzeug (7) montierten Erregeranordnung (6), wobei die Langstatorwicklung (5, 26) in Richtung der Trasse in aufeinander folgende, durch Wechselstellen (73 bis 76 bzw. 93 bis 95) voneinander getrennte Wicklungsabschnitte (5.1 bis 5.9, 26.1 bis 26.9) unterteilt ist, die jeweils eine größere Länge als die Erregeranordnung (6) aufweisen, wenigstens zwei den Wicklungsabschnitten (5.1 bis 5.9, 26.1 bis 26.9) zugeordnete Streckenkabel (59a bis 60b, 102 bis 105) zur Versorgung der Wicklungsabschnitte (5.1 bis 5.9, 26.1 bis 26.9) mit elektrischer Energie und Schalteinrichtungen (61 bis 68, 96 bis 101) zum nacheinander erfolgenden Anschluß der Wicklungsabschnitte (5.1 bis 5.9, 26.1 bis 26.9) an je ein Streckenkabel (59a bis 60b, 102 bis 105) entsprechend der Fortbewegung des Fahrzeugs (7), **dadurch gekennzeichnet, daß** die Wicklungsabschnitte (5.1 bis 5.9, 26.1 bis 26.9) wenigstens je ein erstes und eines zweites Wicklungsabschnittsteil (45a bis 50b) aufweisen, wobei das erste Wicklungsabschnittsteil (45a, 46a, 47a bzw. 48a, 49a, 50a) aus elektrisch leitend miteinander verbundenen, ersten Wicklungs-Teilstücken (51 bzw. 53) und das zweite Wicklungsabschnittsteil (45b, 46b, 47b bzw. 48b, 49b, 50b) aus elektrisch leitend miteinander verbundenen, zweiten Wicklungs-Teilstücken (52 bzw. 54) besteht und wobei die ersten und zweiten Teilstücke (51 bis 54) eine kleinere Länge als die Erregeranordnung (6) haben und in Richtung der Trasse in einer vorgewählten Reihenfolge so hintereinander angeordnet sind, daß die Wicklungsabschnitte (5.1 bis 5.9, 26.1 bis 26.9) in beliebigen gedachten, längs der Trasse erstreckten Sektoren, die eine der Erregeranordnung (6) entsprechende Länge aufweisen, stets wenigstens je ein erstes und zweites Wicklungs-Teilstück (51, 52 bzw. 53, 54) enthalten.

2. Vorrichtung nach Anspruch 1, **dadurch gekennzeichnet, daß** erste Schalteinrichtungen (62, 66 bzw. 61, 65) zum Anschluß der ersten Wicklungsabschnittsteile (46a, 47a bzw. 49a, 50a) an ein erstes Streckenkabel (59a bzw. 60a) und zweite Schalteinrichtungen (64, 68 bzw. 63, 67) zum Anschluß der zweiten Wicklungsabschnittsteile (46b, 47b bzw. 49b, 50b) an ein zweites Streckenkabel (59b bzw. 60b) vorgesehen sind.

3. Vorrichtung nach Anspruch 2, **dadurch gekennzeichnet, daß** die ersten und zweiten Wicklungsabschnittsteile (45a bis 50a bzw. 45b bis 50b) längs der Trasse durch Wechselstellen (73 bis 76) voneinander getrennt sind, die Abstände voneinander aufweisen, die größer sind, als der Länge der Erregeranordnung (6) entspricht.

4. Vorrichtung nach Anspruch 2 oder 3, **dadurch gekennzeichnet, daß** sie zum Betreiben von Fahrzeugen (7) mit wenigstens zwei in Trassenrichtung nebeneinander angeordneten Erregeranordnungen (6) für jede dieser Erregeranordnungen (6) je ein erstes und ein zweites Wicklungsabschnittsteil (45a bis 50a bzw. 45b bis 50b) mit ersten und zweiten Wicklungs-Teilstücken (51, 53 bzw. 52, 54), je zwei diesen zugeordnete Streckenkabel (59a, 60a bzw. 59b, 60b) und je zwei zum Anschluß der Wicklungsabschnittsteile (45a bis 50b) an diese bestimmte, erste und zweite Schalteinrichtungen (73 bis 76) aufweist.

5. Vorrichtung nach Anspruch 4, **dadurch gekennzeichnet, daß** alle ersten und zweiten Wicklungsabschnittsteile (45a bis 50b) durch Wechselstellen (73 bis 76) voneinander getrennt sind, deren Abstände größer sind, als der Länge der längsten am Fahrzeug (7) montierten Erregeranordnung (6) entspricht.

6. Vorrichtung nach Anspruch 1, **dadurch gekennzeichnet, daß** der Langstator-Linearmotor zum Betreiben von Fahrzeugen (7) mit wenigstens zwei in Trassenrichtung nebeneinander angeordneten Erregeranordnungen (6) eingerichtet ist und wenigstens zwei nebeneinander verlegte, je einer der Erregeranordnungen (6) zugeordnete Langstatorwicklungen (5, 26) aufweist, die in Richtung der Trasse in aufeinander folgende Wicklungsabschnitte (5.1 bis 5.9, 26.1 bis 26.9) unterteilt sind, die jeweils eine größere Länge als die zugeordnete Erregeranordnung (6) aufweisen, und daß wenigstens erste, zweite und dritte Wicklungsabschnittsteile (80a bis 83b) vorgesehen sind, die aus elektrisch leitend miteinander verbundenen ersten, zweiten und dritten Wicklungs-Teilstücken (84a bis 89b) bestehen, die kleinere Längen als die zugeordneten Erregeranordnungen (6) haben und in Richtung der Trasse in einer vorgewählten Reihenfolge hintereinander und nebeneinander im Bereich der vorhandenen Wicklungsabschnitte (5.1 bis 5.9, 26.1 bis 26.9) so angeordnet sind, daß diese in beliebigen gedachten, längs der Trasse erstreckten Sektoren, die eine der Länge der zugeordneten Erregeranordnung (6) entsprechende Länge aufweisen, stets die Wicklungs-Teilstücke von wenigstens zwei unterschiedlichen Wicklungsabschnittsteilen aufweisen.

7. Vorrichtung nach Anspruch 6, **dadurch gekennzeichnet, daß** die Wicklungsabschnitte (5.1 bis 5.9, 26.1 bis 26.9) in diesen Sektoren stets wenigstens ein erstes, zweites und drittes Teilstück (z. B. 84a, 85a, 86a bzw. 88a, 89a, 87a) je eines ersten, zweiten und dritten Wicklungsabschnittsteils (z. B. 83a, 81a, 82b) aufweisen.

8. Vorrichtung nach Anspruch 7, **dadurch gekennzeichnet, daß** sie wenigstens drei Streckenkabel (102 bis 105) und zum Anschluß der Wicklungsabschnittsteile (80a bis 83b) an diese bestimmte Schalteinrichtungen (96 bis 101) aufweist.

9. Vorrichtung nach Anspruch 7, **dadurch gekennzeichnet, daß** sie vier Streckenkabel (102 bis 105) und zum Anschluß der Wicklungsabschnittsteile (80a bis 82b) an diese bestimmte Schalteinrichtungen (96 bis 101) derart aufweist, daß sich an jedem Ort längs der Trasse jeweils ein Streckenkabel (102 bis 105) und ein mit diesem verbundener Umrichter (106 bis 109) in einem Standby-Zustand befinden.

10. Vorrichtung nach einem der Ansprüche 6 bis 9, **dadurch gekennzeichnet, daß** die ersten, zweiten und dritten Wicklungsabschnittsteile (80a bis 83b) längs der Trasse durch Wechselstellen (93 bis 95) getrennt sind, die Abstände voneinander aufweisen, die größer sind, als der Länge der längsten Erregeranordnung (6) entspricht.

## Claims

1. Apparatus for operating a magnet vehicle (7), especially a magnetically levitated vehicle, including: a synchronous long stator linear motor with at least one long stator winding (5, 26) laid along a track and at least one exciter arrangement (6) cooperating with this, extending in the direction of the track and mounted on the vehicle (7), wherein the long stator winding (5, 26) is divided into winding sections (5.1 to 5.9, 26.1 to 26.9) following one another in the direction of the track, separated from one another by changeover points (73 to 76 or 93 to 95) and each having a greater length than the exciter arrangement (6), at least two section cables (59a to 60b, 102 to 105) associated with the winding sections (5.1 to 5.9, 26.1 to 26.9) for supplying the winding sections (5.1 to 5.9, 26.1 to 26.9) with electric power and switch devices (61 to 68, 96 to 101) for sequential connection of the winding sections (5.1 to 5.9, 26.1 to 26.9) each to a section cable (59a to 60b, 102 to 105) in correspondence with the progression of the vehicle (7), **characterized in that** the winding sections (5.1 to 5.9, 26.1 to 26.9) each comprise at least a first and a second winding section part (45a to 50b), wherein the first winding section part (45a, 46a, 47a or 48a, 49a, 50a) consists of first winding segments (51 and 53) connected electrically conductively to each other and the second winding section part (45b, 46b, 47b or 48b, 49b, 50b) consists of second winding segments (52 to 54) connected electrically conductively to each other and wherein the first and second segments (51 to 54) have a smaller length than the exciter arrangement (6) and are so arranged one after the other in the direction of the track in a predetermined sequence that the winding sections (5.1 to 5.9, 26.1 to 26.9) in any arbitrarily conceived sector extending along the track and having a length corresponding to the exciter arrangement (6) always contain in each case at least one first and one second winding segment (51, 52 or 53, 54).

2. Apparatus according to claim 1, **characterized in that** first switch devices (62, 66 or 61, 65) are provided for connection of the first winding section parts (46a, 47a or 49a, 50a) to a first section cable (59a or 60a) and second switch devices (64, 68 or 63, 67) are provided for connection of the second winding section parts (46b, 47b or 49b, 50b) to a second section cable (59b or 60b).

3. Apparatus according to claim 2, **characterized in that** the first and second winding section parts (45a to 50a and 45b to 50b) are separated from one another along the track by changeover points (73 to 76) which have distances from one another which are greater than corresponds to the length of the exciter arrangement (6).

4. Apparatus according to claim 2 or 3, **characterized in that**, for operating vehicles (7) with at least two exciter arrangements (6) arranged beside one another in the track direction, it comprises for each of these exciter arrangements (6) a first and a second winding section part (45a to 50a and 45b to 50b) with first and second winding segments (51, 53 and 52, 54), section cables (59a, 60a and 59b, 60b) associated therewith and first and second switch devices (73 to 76) for connection of the winding section parts (45a to 50b) to these cables.

5. Apparatus according to claim 4, **characterized in that** all first and second winding section parts (45a to 50b) are separated from one another by changeover points (73 to 76) whose spacing is greater than the length of the longest exciter arrangement (6) mounted on the vehicle (7).

6. Apparatus according to claim 1, **characterized in that** the long stator linear motor is arranged for operating vehicles (7) with at least two exciter arrangements (6) arranged beside one another in the track direction and comprises at least two long stator windings (5, 26) laid alongside one another, each associated with one of the exciter arrangements (6), which windings are divided in the direction of the track into winding sections (5.1 to 5.9, 26.1 to 26.9) following one another which each have a greater length than the associated exciter arrangement (6), and **in that** at least first, second and third winding section parts (80a to 83b) are provided and consist of first, second and third winding segments (84a to 89b) connected electrically conductively together and having lengths smaller that the associated exciter arrangements (6) and are so arranged in the direction of the track one after the other and alongside one another in the region of the existing winding sections (5.1 to 5.9, 26.1 to 26.9) in a predetermined sequence such that these sections always comprise the winding segments from at least two different winding section parts in arbitrary sectors conceived along the track having a length corresponding to the associated exciter arrangement (6).

7. Apparatus according to claim 6 or 7, **characterized in that** the winding sections (5.1 to 5.9, 26.1 to 26.9) in these sectors always comprise at least a first, second and third segment (e.g. 84a, 85a, 86a or 88a, 89a, 87a) of a first, second and third winding section part (e.g. 83a, 81a, 82b).

8. Apparatus according to claim 7, **characterized in that** comprises at least three section cables (102 to 105) and switch devices (96 to 101) adapted for connection of the winding section parts (80a to 83b) thereto.

9. Apparatus according to claim 7, **characterized in that** it comprises four section cables (102 to 105) and switch devices (96 to 101) for connecting the winding section parts (80a to 82b) thereto in such a manner that at any place along the track one section cable (102 to 105) and a converter (106 to 109) connected thereto are in a standby state.

10. Apparatus according to any of claims 6 to 9, **characterized in that** the first, second and third winding section parts (80a to 83b) are separated along the track by changeover points (93 to 95) which have distances from one another which are greater than corresponds to the length of the longest exciter arrangement (6).

## Revendications

1. Dispositif pour faire fonctionner un véhicule magnétique (7), en particulier un véhicule à sustentation magnétique, comprenant : un moteur linéaire à stator long synchrone avec au moins un enroulement de stator long (5, 26) posé le long d'un tracé et au moins un dispositif excitateur (6) en interaction avec celui-ci, s'étendant en direction du tracé, monté sur le véhicule (7), l'enroulement de stator long (5, 26) étant divisé en direction du tracé en sections d'enroulement (5.1 à 5.9, 26.1 à 26.9) successives séparées les unes des autres par des positions de changement (73 à 76 ou 93 à 95) et qui présentent chacune une plus grande longueur que le dispositif excitateur (6), au moins deux câbles de ligne (59a à 60b, 102 à 105) associés aux sections d'enroulement (5.1 à 5.9, 26.1 à 26.9) pour l'alimentation des sections d'enroulement (5.1 à 5.9, 26.1 à 26.9) en énergie électrique et des dispositifs de commutation (61 à 68, 96 à 101) pour le raccordement successif des sections d'enroulement (5.1 à 5.9, 26.1 à 26.9) à chaque fois à un câble de ligne (59a à 60b, 102 à 105) en fonction de la marche du véhicule (7), **caractérisé par le fait que** les sections d'enroulement (5.1 à 5.9, 26.1 à 26.9) présentent au moins chaque fois une première et une deuxième partie de section d'enroulement (45a à 50b), la première partie de section d'enroulement (45a, 46a, 47a ou 48a, 49a, 50a) étant constituée de premiers tronçons d'enroulement (51 ou 53) reliés entre eux de manière électroconductrice et la deuxième partie de section d'enroulement (45b, 46b, 47b ou 48b, 49b, 50b) de deuxièmes tronçons d'enroulement (52 ou 54) reliés entre eux de manière électroconductrice, et les premiers et deuxièmes tronçons (51 à 54) ayant une plus petite longueur que le dispositif excitateur (6) et étant disposés les uns derrière les autres en direction du tracé dans un ordre présélectionné de telle manière que les sections d'enroulement (5.1 à 5.9, 26.1 à 26.9) contiennent toujours au moins chaque fois un premier et un deuxième tronçon d'enroulement (51, 52 ou 53, 54) dans des secteurs imaginaires quelconques s'étendant le long du tracé qui présentent une longueur correspondante à celle du dispositif excitateur (6).

2. Dispositif selon la revendication 1, **caractérisé par le fait que** des premiers dispositifs de commutation (62, 66 ou 61, 65) sont prévus pour le raccordement des premières parties de section d'enroulement (46a, 47a ou 49a, 50a) à un premier câble de ligne (59a ou 60a) et des deuxièmes dispositifs de commutation (64, 68 ou 63, 67) pour le raccordement des deuxièmes parties de section d'enroulement (46b, 47b ou 49b, 50b) à un deuxième câble de ligne (59b ou 60b).

3. Dispositif selon la revendication 2, **caractérisé par le fait que** les premières et deuxièmes parties de section d'enroulement (45a à 50a ou 45b à 50b) sont séparées les unes des autres le long du tracé par des positions de changement (73 à 76) qui présentent entre elles des distances qui sont plus grandes que la longueur du dispositif excitateur (6).

4. Dispositif selon la revendication 2 ou 3, **caractérisé par le fait qu'**il présente, pour le fonctionnement de véhicules (7) avec au moins deux dispositifs excitateurs (6) disposés l'un à côté de l'autre en direction du tracé, pour chacun de ces dispositifs excitateurs (6) chaque fois une première et une deuxième partie de section d'enroulement (45a à 50a ou 45b à 50b) avec des premiers et des deuxièmes tronçons d'enroulement (51, 53 ou 52, 54), chaque fois deux câbles de ligne (59a, 60a ou 59b, 60b) associés à ceux-ci et chaque fois deux premiers et deuxièmes dispositifs de commutation (73 à 76) destinés au raccordement des parties de section d'enroulement (45a à 50b) à ceux-ci.

5. Dispositif selon la revendication 4, **caractérisé par le fait que** toutes les premières et deuxièmes parties de section d'enroulement (45a à 50b) sont séparées les unes des autres par des positions de changement (73 à 76) dont les distances sont plus grandes que la longueur du plus long dispositif excitateur (6) monté sur le véhicule (7).

6. Dispositif selon la revendication 1, **caractérisé par le fait que** le moteur linéaire à stator long est conçu pour faire fonctionner des véhicules (7) avec au moins deux dispositifs excitateurs (6) disposés l'un à côté de l'autre en direction du tracé et présente au moins deux enroulements de stator long (5, 26) posés l'un à côté de l'autre, associés chacun à un des dispositifs excitateurs (6), qui sont divisés en direction du tracé en sections d'enroulement (5.1 à 5.9, 26.1 à 26.9) successives qui présentent chacune une plus grande longueur que le dispositif excitateur (6) associé, et qu'il est prévu au moins des premières, deuxièmes et troisièmes parties de section d'enroulement (80a à 83b) qui sont constituées de premiers, deuxièmes et troisièmes tronçons d'enroulement (84a à 89b) reliés entre eux de manière électroconductrice qui ont des longueurs plus petites que les dispositifs excitateurs (6) associés et sont disposés l'un derrière l'autre en direction du tracé dans un ordre présélectionné et l'un à côté de l'autre au niveau des sections d'enroulement (5.1 à 5.9, 26.1 à 26.9) présentes de telle manière que ceux-ci présentent toujours les tronçons d'enroulement d'au moins deux parties de section d'enroulement différentes dans des secteurs imaginaires quelconques s'étendant le long du tracé qui présentent une longueur correspondante à la longueur du dispositif excitateur (6) associé.

7. Dispositif selon la revendication 6, **caractérisé par le fait que** les sections d'enroulement (5.1 à 5.9, 26.1 à 26.9) dans ces secteurs présentent toujours au moins un premier, deuxième et troisième tronçon (p. ex. 84a, 85a, 86a ou 88a, 89a, 87a) de chaque fois une première, deuxième et troisième partie de section d'enroulement (p. ex. 83a, 81a, 82b).

8. Dispositif selon la revendication 6, **caractérisé par le fait qu'**il présente au moins trois câbles de ligne (102 à 105) et des dispositifs de commutation (96 à 101) destinés au raccordement des parties de section d'enroulement (80a à 83b) à ceux-ci.

9. Dispositif selon la revendication 7, **caractérisé par le fait qu'**il présente quatre câbles de ligne (102 à 105) et des dispositifs de commutation (96 à 101) destinés au raccordement des parties de section d'enroulement (80a à 82b) à ceux-ci de telle manière que chaque fois un câble de ligne (102 à 105) et un variateur de fréquence (106 à 109) relié à celui-ci se trouvent dans un état de standby ou d'attente en tout point le long du tracé.

10. Dispositif selon l'une des revendications 6 à 9, **caractérisé par le fait que** les premières, deuxièmes et troisièmes parties de section d'enroulement (80a à 83b) sont séparées le long du tracé par des positions de changement (93 à 95) qui présentent entre elles des distances qui sont plus grandes que la longueur du dispositif excitateur (6) le plus long.
